# EUROPÄISCHE PATENTSCHRIFT

(11) **EP 2 153 178 B1**
(45) Veröffentlichungstag und Bekanntmachung des Hinweises auf die Patenterteilung: **13.06.2018**
(21) Anmeldenummer: 08735821.4
(22) Anmeldetag: 04.04.2008
(51) Int. Cl.: G01F 1/684, G01F 15/14, B81B 7/00

(54) **HEISSFILMLUFTMASSENMESSER UND DESSEN HERSTELLUNGSVERFAHREN**
HOT FILM-TYPE AIR FLOW METER AND PRODUCTION METHOD THEREOF
DÉBITMÈTRE MASSIQUE À FILM CHAUD ET PROCÉDÉ PERMETTANT DE LE PRODUIRE

(30) Priorität: 29.05.2007 DE 102007024865
(43) Veröffentlichungstag der Anmeldung: 17.02.2010
(73) Patentinhaber: Robert Bosch GmbH, 70442 Stuttgart (DE)
(72) Erfinder: SCHNEIDER, Norbert, 75233 Tiefenbronn (DE); HECHT, Hans, 70567 Stuttgart (DE); KONZELMANN, Uwe, 71679 Asperg (DE); WESTENBERGER, Lutz, 71686 Remseck (DE); KUENZL, Bernd, 71701 Schwieberdingen (DE)
(86) Internationale Anmeldenummer: PCT/EP2008/054080
(87) Internationale Veröffentlichungsnummer: WO 2008/145445

(56) Entgegenhaltungen:
- EP-A- 1 762 851
- DE-A1- 19 939 824
- DE-A1- 19 941 330
- DE-A1-102005 006 158
- DE-A1-102005 016 122

## Beschreibung

### Stand der Technik

Die Erfindung geht aus von bekannten Vorrichtungen zur Messung wenigstens eines Parameters eines strömenden fluiden Mediums, insbesondere eines durch ein Strömungsrohr strömenden fluiden Mediums, wie sie aus verschiedenen Bereichen der Technik bekannt sind. So müssen bei vielen Prozessen, beispielsweise auf dem Gebiet der Verfahrenstechnik, der Chemie oder des Maschinenbaus, definiert fluide Medien, insbesondere Gasmassen (z. B. eine Luftmasse) mit bestimmten Eigenschaften (beispielsweise Temperatur, Druck, Strömungsgeschwindigkeit, Massenstrom etc.) zugeführt werden. Hierzu zählen insbesondere Verbrennungsprozesse, welche unter geregelten Bedingungen ablaufen.

Ein wichtiges Anwendungsbeispiel ist die Verbrennung von Kraftstoff in Brenn-kraftmaschinen von Kraftfahrzeugen, insbesondere mit anschließender katalytischer Ab-gasreinigung, bei denen geregelt eine bestimmte Luftmasse pro Zeiteinheit (Luftmassen-strom) zugeführt werden muss. Zur Messung des Luftmassendurchsatzes werden dabei verschiedene Typen von Sensoren eingesetzt. Ein aus dem Stand der Technik bekannter Sensortyp ist der so genannte Heißfilmluftmassenmesser (HFM), welcher beispielsweise in DE 196 01 791 A1 in einer Ausführungsform beschrieben ist.

Bei derartigen Heißfilmluftmassenmessem wird üblicherweise ein Sensorchip eingesetzt, welcher eine dünne Sensormembran aufweist, beispielsweise ein Silizium-Sensorchip. Auf der Sensormembran ist typischerweise mindestens ein Heizwiderstand angeordnet, welcher von zwei oder mehr Temperaturmesswiderständen (Temperaturfühlern) umgeben ist. In einem Luftstrom, welcher über die Membran geführt wird, ändert sich die Temperaturverteilung, was wiederum von den Temperaturmesswiderständen erfasst werden kann und mittels einer Ansteuer- und Auswertungsschaltung ausgewertet werden kann. So kann, zum Beispiel aus einer Widerstandsdifferenz der Temperaturmesswiderstände, ein Luftmassenstrom bestimmt werden. Verschiedene andere Varianten dieses Sensortyps sind aus dem Stand der Technik bekannt, beispielsweise Sensoren, die nicht mit Membranen, sondern mit porösen Sensorchips arbeiten.

Weitere bekannten Vorrichtungen zur Bestimmung wenigstens eines Parameters fluider Medien sind aus DE 10 2005 006158 A1, DE 199 41 330 A1, DE 10 2005 016122 A1, DE 199 39 824 A1, und EP-A-1 762 851 A bekannt.

Die bekannten Heißfilmluftmassenmesser sowie andere bekannte Vorrichtungen zur Bestimmung wenigstens eines Parameters fluider Medien weisen in Regel einen Chipträger auf, auf bzw. in welchen der Sensorchip eingesetzt wird. Der Chipträger ragt üblicherweise in das fluide Medium hinein, wobei in der Regel der Chipträger derart ausgestaltet ist, dass mit eingefügtem Sensorchip eine im Wesentlichen glatte, vom fluiden Medium ohne Turbulenzenbildung überströmbare Oberfläche ausgebildet ist.

Bei den bekannten Heißfilmluftmassenmessern beispielsweise wird der Chipträger dadurch hergestellt, dass ein Blechträger für eine Ansteuer- und Auswerteelektronik eingesetzt wird, auf welchem ein Schaltungsträger (zum Beispiel eine Leiterplatte) befestigt ist. Der Chipträger selbst wird in der Regel durch einen Montageprozess am Blechträger befestigt, beispielsweise durch Anspritzen bei einem Spritzgießprozess.

Nach der Bestückung des Schaltungsträgers werden dann in der Regel die Sensorchips in zusätzlichen Prozessschritten auf dem Chipträger montiert. Hierzu wird in der Regel ein Klebstoff in eine Aufnahme aus Metall oder Kunststoff eingebracht, der Chip wird mit einem zusätzlichen Handlingsystem einem vereinzelten Silizium-Waver entnommen, und der Chip wird in der Chip-Aufnahme innerhalb des Chipträgers positioniert. Anschließend wird der Klebstoff, wobei es sich beispielsweise um einen Silikonkleber handeln kann, in einem Ofen ausgehärtet.

Dieses bekannte Herstellungsverfahren und die damit hergestellten Vorrichtungen weisen jedoch Raum für Verbesserungen auf. Insbesondere sind für die Einbringung des Sensorchips in bzw. auf den Chipträger zahlreiche Einzelschritte erforderlich, welche den Herstellprozess und damit das Endprodukt verteuern oder die Gewinnmargen verringern. Ein weiterer Nachteil besteht darin, dass die Aushärtung des Klebstoffes im Ofen wiederum zu einer Beschädigung der bereits bestückten Elektronik führen kann und dass vor dem Aushärten aufgrund eines in der Regel vorhandenen Spiels des Sensorchips innerhalb des Chipträgers bzw. einer Vertiefung des Chipträgers Bauteiltoleranzen durch Verrutschen des Sensorchips auf dem nichtausgehärteten Klebstoff auftreten können.

### Offenbarung der Erfindung

Es wird dementsprechend eine Vorrichtung zur Bestimmung wenigstens eines Parameters eines fluiden Mediums vorgeschlagen, wobei es sich beispielsweise um eine Vorrichtung zur Bestimmung der Ansaugluftmasse einer Brennkraftmaschine handeln kann. Vorzugsweise handelt es sich bei dieser Vorrichtung um einen Heißfilmluftmassenmesser. Weiterhin wird ein Verfahren zur Herstellung einer derartigen Vorrichtung vorgeschlagen, insbesondere zur Herstellung einer Vorrichtung mit den erfindungsgemäßen Vorrichtungsmerkmalen.

Die erfindungsgemäße Vorrichtung weist, wie die eingangs beschriebenen Vorrichtungen, einen Sensorchip zur Messung des Parameters auf. Beispielsweise kann es sich dabei um einen der eingangs genannten Heißfilmluftmassenmesser-Chips handeln, welcher gemäß dem Stand der Technik aufgebaut sein kann und welcher insbesondere einen Heizwiderstand und zwei Temperaturfühler auf einer Sensoroberfläche aufweisen kann.

Weiterhin umfasst die erfindungsgemäß Vorrichtung eine Ansteuer- und Auswerteelektronik mit mindestens einem Schaltungsträger. Beispielsweise kann es sich bei diesem Schaltungsträger wiederum um eine Leiterplatte handeln, insbesondere eine Keramik-Leiterplatte und/oder eine Leiterplatte, welche Kunststoffe als Material aufweist. Auch diese Ansteuer- und Auswerteelektronik kann beispielsweise aufgebaut sein wie aus dem Stand der Technik bekannt und kann beispielsweise elektronische Bausteine umfassen, um den Heizwiderstand anzusteuern und elektronische Komponenten, um die Temperaturfühler auszuwerten.

Weiterhin weist die Vorrichtung wiederum wieder einen Chipträger auf, welcher zum Einbringen des Sensorchips bzw. der Sensoroberfläche des Sensorchips in das fluide Medium dient.

Ein Grundgedanke der vorliegenden Erfindung besteht darin, die Montage des Chipträgers gegenüber den bekannten Vorrichtungen erheblich zu vereinfachen. Insbesondere kann mit der im Folgenden vorgeschlagenen Vorrichtung und einem entsprechenden Herstellungsverfahren die Montage des Chipträgers durch Spritzgießen an einen Blechträger entfallen.

Dementsprechend wird vorgeschlagen, den Schaltungsträger selbst bzw. einen Teil dieses Schaltungsträgers als Bestandteil des Chipträgers zu nutzen. Zu diesem Zweck weist der Schaltungsträger einen mit dem restlichen Schaltungsträger einstückig ausgebildeten Vorsprung auf. Beispielsweise kann es sich dabei um einen näherungsweise rechteckigen Vorsprung handeln, welcher beispielsweise aus dem restlichen Schaltungsträger (zum Beispiel der Leiterplatte) durch Sägen herausgearbeitet ist. Vorzugsweise wird die Vorrichtung derart verwendet, dass lediglich dieser Vorsprung des Schaltungsträgers in das fluide Medium hineinragt. Der Sensorchip ist dabei auf diesem Vorsprung fixiert.

Diese Fixierung des Sensorchips auf dem Vorsprung kann beispielsweise durch eine stoffschlüssige Verbindung, insbesondere durch eine Klebung, erfolgen. Erfindungsgemäß umfasst die Fixierung des Sensorchips eine Klebung mit einer Klebefolie, da eine derartige Klebefolie in einem "Pick-and-Place"-Verfahren aufgebracht werden kann, beispielsweise mittels eines handelsüblichen Leiterplatten-Bestückungssystems, und da auf diese Weise Aushärtungsschritte in einem Ofen entfallen können. Zusätzlich zur Klebung sind jedoch auch andere Verfahren denkbar, beispielsweise eine kraftschlüssige Fixierung und/oder eine formschlüssige Fixierung.

Weiterhin umfasst der Chipträger einen Rahmen, welcher auf den Vorsprung aufgebracht ist und welcher den Sensorchip zumindest teilweise umschließt. Dieser Rahmen ist ebenfalls durch eine der oben beschriebenen Fixierungsarten mit dem Vorsprung verbunden, wiederum mittels einer Klebefolie. Zu diesem Zweck wird dieselbe Klebefolie verwendet, mittels derer auch der Sensorchip auf dem Vorsprung befestigt ist.

Der Rahmen kann eine Aussparung umfassen, in welche der Sensorchip eingefügt ist. Diese Aussparung kann derart ausgestaltet sein, dass nach Aufbringen des Rahmens die Gesamtoberfläche des Chipträgers, welche nunmehr aus Rahmenoberfläche und Sensorchip-Oberfläche gebildet wird, im Wesentlichen eben und bündig ist. Weiterhin kann die Aussparung derart ausgestaltet sein, dass der Sensorchip auf dem Vorsprung selbst aufliegt, oder die Aussparung kann lediglich eine Vertiefung umfassen, in welche der Sensorchip eingefügt ist, ohne in Kontakt mit dem Vorsprung zu sein.

Weiterhin kann der Rahmen zusätzlich Strömungsführungselemente umfassen, welche geeignet sind, um beispielsweise eine Strömung des fluiden Mediums um den Sensorträger herumzuführen und/oder um einen Druckabfall des fluiden Mediums an der Vorrichtung selbst bzw. am Chipträger zu vermindern. Insbesondere kann dieses Strömungsführungselement eine abgerundete Anströmnase umfassen, welche der Hauptströmungsrichtung des fluiden Mediums am Ort des Chipträgers im eingebauten Zustand der Vorrichtung entgegenweist. Diese abgerundete Anströmnase kann beispielsweise ein Druckabfall oder eine Turbulenzbildung an scharfen Kanten des Vorsprungs des Schaltungsträgers ausgleichen. Insbesondere kann zu diesem Zweck die Anströmnase ausgestaltet sein, um den Vorsprung auf einer Anströmseite zumindest teilweise zu umschließen, sodass in diesem Bereich zumindest teilweise scharfe Kanten des Vorsprungs abgedeckt werden.

Für die Herstellung der Vorrichtung in einer der oben beschriebenen Ausführungsformen sowie ähnlicher Vorrichtungen kann beispielsweise ein aus der Leiterplattentechnologie bekanntes Pick-and-Place-Verfahren eingesetzt werden. Ein wesentlicher Vorteil des beschriebenen Verfahrens besteht darin, dass sowohl die Bestückung des Schaltungsträgers als auch die Montage des Sensorchips und gegebenenfalls des Rahmens mittels Klebefolie erfolgen kann, wobei vorzugsweise alle Bauteile mittels desselben Handlingsystems bzw. Bestückungssystems aufgebracht werden können. Zusätzlich Prozessschritte wie ein Kleberauftrag und eine anschließende Aushärtung eines Klebstoffs können entfallen, insbesondere wenn eine Klebefolie verwendet wird. Ein zusätzlich Spritzgießprozess an einen Blechträger kann entfallen. Die vorgeschlagene Vorrichtung und das vorgeschlagene Verfahren zeichnen sich daher durch eine erhebliche Reduzierung der Fertigungsschritte und der für die Fertigung benötigten Geräte aus. Dadurch lassen sich die Fertigungskosten erheblich reduzieren und die Taktzeiten der Herstellung lassen sich beträchtlich reduzieren.

### Kurze Beschreibung der Zeichnungen

Ausführungsbeispiele der Erfindung sind in den Zeichnungen dargestellt und in der nachfolgenden Beschreibung näher erläutert. Es zeigen:
Figur 1 einem im Ansaugtrakt einer Brennkraftmaschine eingesetzten Heißfilmluftmassenmesser;
Figur 2 einen geöffneten Heißfilmluftmassenmesser in Draufsicht;
Figur 3 einen Blechträger eines Heißfilmluftmassenmessers mit einer Ansteuer- und Auswerteelektronik und angespritztem Chipträger;
Figur 4 einen erfindungsgemäß aufgebauten Chipträger mit eingesetztem Sensorchip in Schnittdarstellung; und
Figur 5 den erfindungsgemäßen Chipträger gemäß Figur 4 in Draufsicht.

### Ausführungsformen der Erfindung

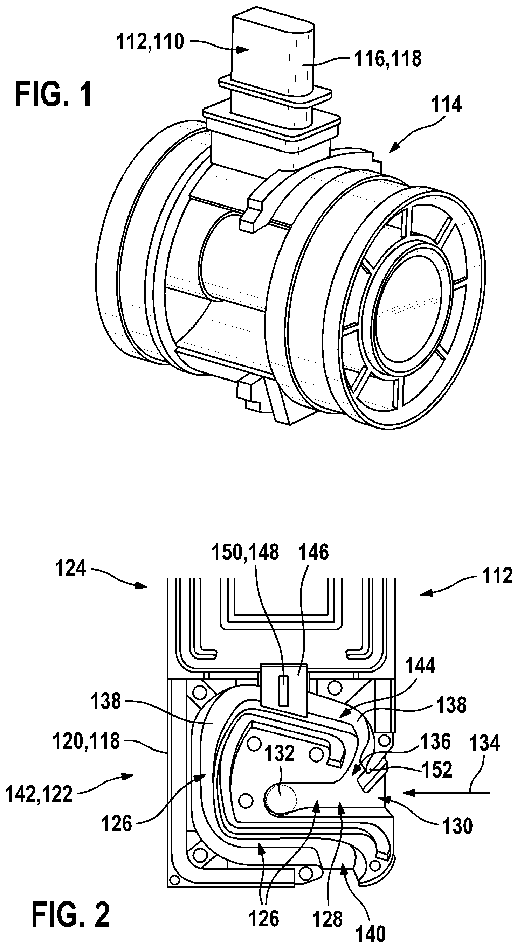

In Figur 1 ist ein Beispiel einer Vorrichtung 110 zur Bestimmung eines Parameters eines mit einer Hauptströmungsrichtung strömenden fluiden Medium dargestellt. In diesem Ausführungsbeispiel handelt es sich bei der Vorrichtung 110, wie auch in den folgenden Ausführungsbeispielen (ohne Beschränkung des Schutzumfangs der Erfindung) um einen Heißfilmluftmassenmesser 112, welcher in einen Ansaugtrakt 114 einer (in Figur 1 nicht dargestellten) Brennkraftmaschine eingesetzt ist. Derartige Heißfilmluftmassenmesser 112 sind kommerziell erhältlich und sind beispielsweise in DE 102 46 069 A1 oder DE 103 48 400 A1 beschrieben.

Der Heißfilmluftmassenmesser 112 ist ausgestaltet, um die Strömungsrichtung eines Abgasstroms bei pulsierender Strömung zu erkennen und ist für eine Lasterfassung bei Brennkraftmaschinen mit Benzin- oder Dieselkraftstoffeinspritzung konzipiert. Der Einbau des Heißfilmluftmassenmessers 112 erfolgt üblicherweise zwischen einem Luftfilter und einer Drosselvorrichtung und erfolgt in der Regel als vormontierte Baugruppe in Form eines Steckfühlers 116 mit einem Messgehäuse 118. Üblicherweise werden derartige Messgehäuse 118 als Spritzgussbauteile gefertigt, zumeist aus technischen Kunststoffen, welche für die Automobilindustrie geeignet sind. Typische Kunststoffe sind Glasfaser-gefüllte Thermoplaste, wie beispielsweise PBT mit einer Glasfaserfüllung von 20 %. Auch andere Kunststoffe sind einsetzbar.

In Figur 2 ist der Heißfilmluftmassenmesser 112 gemäß dem Beispiel in Figur 1 mit geöffnetem Messgehäuse 118 in Draufsicht dargestellt. Dabei ist ein (in Figur 2 nicht dargestelltes) Deckelteil des Messgehäuses 118 abgenommen, so dass die Innenseite eines Gehäuse-teils 120 des Messgehäuses 118 sichtbar ist. Das Messgehäuse 118 ist unterteilt in einen Strömungsbereich 122 und einen Elektronikbereich 124. Im Strömungsbereich 122, welcher, wie in Figur 1 ersichtlich, im eingebauten Zustand des Heißfilmluftmassenmessers 112 in den Ansaugtrakt 114 eingesteckt ist, ist ein Strömungskanal 126 aufgenommen, welcher in mehrere Teilkanäle unterteilt ist. So weißt der Strömungskanal 126 zunächst einen Hauptströmungskanal 128 auf, welcher sich von einer Eintrittsöffnung 130 im Wesentlichen horizontal und gerade hin zu einem Auslassloch 132 erstreckt.

Das Auslassloch 132, welches in Figur 2 gestrichelt dargestellt ist, befindet sich im in Figur 2 nicht dargestellten Deckelteil des Messgehäuses 118. Im Bereich vor dem Auslassloch 132 ist der ansonsten im Wesentlichen mit rechteckigem Querschnitt ausgestalteten Strömungskanal 126 bzw. Hauptströmungskanal 128 abgeschrägt mit zum Auslassloch 132 hin abnehmender Kanaltiefe, so dass Luft von der Eintrittsöffnung 130 hin zum Auslassloch 132 geführt wird. Der Heißfilmluftmassenmesser 112 wird von fluidem Medium, beispielsweise Luft im Ansaugtrakt 114, mit einer Hauptströmungsrichtung 134 angeströmt, wobei die Ausrichtung des Heißfilmluftmassenmessers 112 in der Regel so vorgegeben ist, dass die Hauptströmungsrichtung 134 parallel zum Verlauf des Hauptströmungskanals 128 liegt.

Unmittelbar hinter der Eintrittsöffnung 120 ist im Strömungskanal 126 eine Abzweigung 136 angeordnet. An dieser Abzweigung 136, welche im spitzen Winkel zur Hauptströmungsrichtung 134 angeordnet ist, zweigt ein Messkanal 138 vom Hauptströmungskanal 128 ab. Der Messkanal 138 beschreibt einen gekrümmten Verlauf und wird um das Auslassloch 132 des Hauptströmungskanals 128 herumgeführt. Der Messkanal 138 mündet schließlich auf der Unterseite des Gehäuseteils 120 in einem Messkanal-Auslassloch 140. Der Messkanal 138 wird häufig auch als "Bypass" bezeichnet, so dass der Strömungsbereich 122 insgesamt häufig auch als Bypass-Teil 142 bezeichnet wird.

An der Abzweigung 136 wird der Luftmassenstrom, welcher in Hauptströmungsrichtung 134 in den Strömungskanal 126 eintritt, in zwei Teilströme aufgespaltet. Der erste, Haupt-Teilstrom strömt unmittelbar von der Eintrittsöffnung 130 hin zum Auslassloch 132, durch den Hauptströmungskanal 128. Ein zweiter Teilstrom wird jedoch abgezweigt, insbesondere aufgrund von strömungsmechanischen Unterdruck-Phänomenen an der Abzweigung 136, und wird in den Messkanal 138 geleitet. Dieser durch den Messkanal 138 strömende Teilstrom ist repräsentativ für den Gesamtstrom des mit Hauptströmungsrichtung 134 strömenden fluiden Mediums, beispielsweise Luft.

Im Messkanal 138 ist ein gerader Abschnitt 144 vorgesehen, in welchen ein Chipträger 146 mit einem darin eingelassenen Sensorchip 148 aus dem Elektronikbereich 124 in den Messkanal 138 ragt. Der Sensorchip 148 wirkt hier als Sensorelement 150 und kann beispielsweise nach dem oben beschriebenen Prinzip (siehe z.B. DE 196 01 791 A1) ausgestaltet sein.

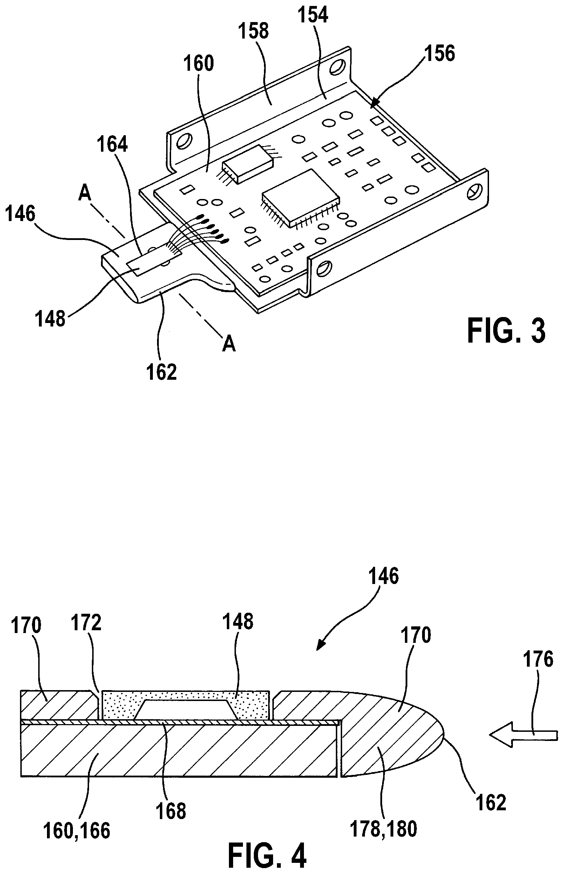

Bei den aus dem Stand der Technik bekannten Heißfilmluftmassenmessem 112 kann der Chipträger 146 beispielsweise als metallisches Bauteil, beispielsweise. als Blechbauteil ausgestaltet sein, oder es kann sich dabei auch um ein Kunststoffbauteil, beispielsweise ein Spritzgussbauteil, handeln. Der Chipträger 146 ist üblicherweise an einem im Elektronikbereich 124 aufgenommenen, in Figur 2 nicht dargestellten, Blechträger befestigt (üblicherweise angespritzt) wobei der Blechträger Auswerte- und Ansteuerschaltung des Heißfilmluftmassenmessers 112 trägt. Dieser Blechträger wird unten anhand von Figur 3 näher erläutert.

Um zu vermeiden, dass Wasser und andere feste oder flüssige Verunreinigungen (beispielsweise Öl), welche von der Luft mitgeführt werden, zum Sensorchip 148 gelangen, ist an der Abzweigung 136 ein so genannter "Zahn" 152 in Form einer scharfen Kante vorgesehen, welcher in die Eintrittsöffnung 130 hineinragt und welcher Ableitflächen mit in Figur 2 nach unten gerichteter Komponente, d.h. im spitzen Winkel zur Hauptströmungsrichtung 134, bereitstellt. Dadurch wird einströmende Luft teilweise nach unten abgelenkt, d.h. weg von der Abzweigung 136. Dieser Zahn 152 sorgt somit für eine Phasentrennung, d.h. dafür, dass der an der Abzweigung 136 abgezweigte Teilstrom, welcher durch den Messkanal 138 strömt, im Wesentlichen frei ist von Wasser und/oder anderen flüssigen oder festen Verunreinigungen. Schmutz- und/oder Wasserteilchen können der scharfen Umlenkung am Zahn 152 nicht folgen und fliegen aufgrund ihrer Trägheit geradeaus durch den Hauptströmungskanal 128 und verlassen diesen durch das seitlich angeordnete Auslassloch 132.

In Figur 3 ist der oben beschriebene Blechträger 154 mit einer Ansteuer- und Auswerteelektronik 156 und dem Chipträger 146 in perspektivischer Darstellung gezeigt. Der Blechträger 154 ist als Stanz-Biege-Teil aus einem üblichen Blechmaterial hergestellt und umfasst seitlich abgewinkelte Halterungen 158, über welche der Blechträger 154 in den oben beschriebenen Elektronikbereich 124 des Messgehäuses 118 eingebracht und dort fixiert werden kann.

Auf den Blechträger 154 aufgebracht ist als Bestandteil der Ansteuer- und Auswerteelektronik 156 ein Schaltungsträger 160, bei welchem es sich im vorliegenden Ausführungsbeispiel beispielsweise um eine ebene, starre oder flexible Leiterplatte, beispielsweise eine Keramikleiterplatte, handeln kann. Der Schaltungsträger 160 ist in diesem Ausführungsbeispiel mit üblichen Bestückungstechnologien mit elektronischen Komponenten bestückt, welche die Funktionen der Ansteuer- und Auswerteelektronik 156 gewährleisten. Weiterhin sind Leiterbahnen und Kontaktpads vorgesehen. Der Schaltungsträger 160 kann beispielsweise auf dem Blechträger 154 aufgeklebt sein.

In dem in Figur 3 dargestellten, dem Stand der Technik entsprechenden Ausführungsbeispiel ist an den Blechträger 154 der Chipträger 146 in üblicher Kunststofftechnologie angespritzt. Der Chipträger 146 weist eine Anströmkante 162 auf, welche im Einsatz der Hauptströmungsrichtung des strömenden fluiden Mediums im Messkanal 138 entgegenweist. Diese Anströmkante 162 ist leicht abgerundet.

Weiterhin weist der Chipträger 146 eine Vertiefung 164 auf, welche im Wesentlichen rechteckig ausgebildet ist, welche jedoch seitlich über Ausbuchtungen für den Eingriff eines Pick-and-Place-Werkzeuges verfügt und in welche der Sensorchip 148 eingefügt ist. Der Sensorchip 148 ist mit dem Schaltungsträger 160 durch Drahtbonden verbunden.

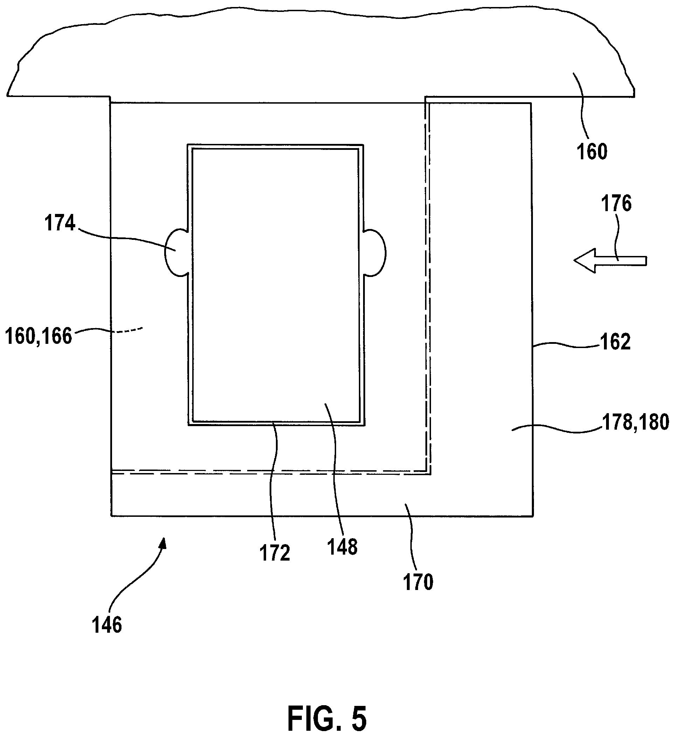

In Figur 4 ist, im Gegensatz zu Figur 3, eine erfindungsgemäße Ausgestaltung eines Chipträgers 146 dargestellt. Die Darstellung in Figur 4 ist eine Schnittdarstellung entlang der Linie A-A in Figur 3 und zeigt die Unterschiede des erfindungsgemäßen Aufbaus gegenüber dem Stand der Technik. In Figur 5 ist der erfindungsgemäße Chipträger 146 in Draufsicht von oben dargestellt. Beide Figuren werden im Folgenden zur Erläuterung der erfindungsgemäßen Vorrichtung herangezogen.

Bei dem vorgeschlagenen Aufbau umfasst der Schaltungsträger 160 einen rechteckigen Vorsprung 166, welcher einstückig mit dem restlichen Schaltungsträger 160 ausgebildet ist, welcher jedoch aus dem Elektronikbereich 124 in den Messkanal 138 hineinragt und somit einen Bestandteil des Chipträgers 146 bildet.

Auf den Vorsprung 166 wird in einem Pick-and-Place-Verfahren eine doppelseitige Klebefolie 168 aufgebracht. Vorzugsweise ist diese doppelseitige Klebefolie 168 einstückig ausgebildet und bedeckt die gesamte Oberfläche des Vorsprungs 166, welche in den Messkanal 138 hineinragt.

Anschließend wird auf die doppelseitige Klebefolie 168 ein Rahmen 170 aufgebracht. Beispielsweise kann dieser Rahmen 170 zuvor in einem separaten Spritzgießprozess aus einem üblichen Kunststoffmaterial hergestellt werden, beispielsweise aus einem in der Kraftfahrzeugtechnik eingesetzten verstärkten oder unverstärkten PBT-Werkstoff (siehe oben). Dieser Rahmen 170 kann dabei auch im Nutzen hergestellt werden, so dass mehrere derartiger Rahmen 170 in einem einzelnen Spritzgießvorgang hergestellt werden können. Der Rahmen 170 kann ebenfalls mittels eines Pick-and-Place-Verfahrens, vorzugsweise mit derselben Maschine, mit welcher auch die doppelseitige Klebefolie 168 aufgebracht wird, auf den Vorsprung 166 aufgesetzt und auf das doppelseitige Klebeband 168 aufgedrückt werden. Weitere Montageschritte sind in der Regel nicht erforderlich.

Der Rahmen 170 weist eine Aussparung 172 auf, welche wiederum, analog zu Figur 3, im Wesentlichen die Gestalt des Sensorchips 148 aufweisen kann. Beispielsweise kann dies wiederum eine rechteckförmige Gestalt sein, wobei jedoch zusätzliche Bohrungen oder Erweiterungen der Aussparung 172 vorgesehen sein können, analog zu Figur 3, um das Pick-and-Place-Verfahren bzw. das Bestücken durch einen entsprechenden Bestückungsautomaten zu erleichtern. Dies ist in Figur 5 schematisch durch die Bestückungserweiterung 174 der Aussparung 172 angedeutet.

In Figur 4 ist eine weitere Besonderheit des Rahmens 170 erkennbar. So weist der Rahmen 170 nicht nur die Aussparung 172 auf, sondern verfügt auch über ein der Strömungsrichtung 176 des fluiden Mediums im Messkanal 138 am Ort des Chipträgers 146 entgegenweisendes Strömungsführungselement 178 in Form einer abgerundeten Anströmnase 180. Diese Anströmnase 180 verdeckt die scharfe Kante des Vorsprungs 166, welche der Strömungsrichtung 176 entgegenweist und schließt auf der dem Sensorchip 148 abgewandten Seite des Chipträgers 146 bündig mit dem Vorsprung 166 ab. Dadurch wird vermieden, dass sich Turbulenzen bilden und der Druckabfall am Chipträger 146 wird vermindert. Die Anströmnase 180 ist auf ihrer der Strömungsrichtung 176 entgegenweisenden Seite abgerundet und bildet somit die Anströmkante 162 des Chipträgers 146. Neben oder alternativ zu der in den Figuren 4 und 5 beschriebenen Anströmnase 180 kann der Rahmen 170 jedoch auch weitere Arten von Strömungsführungselementen 178 umfassen, welche der Optimierung der Aerodynamik dienen, und welche beispielsweise ebenfalls in einer Stufe über den Vorsprung 166 des Schaltungsträgers 160 hinausragen können, um die Kante des Vorsprungs 166 abzudecken. So können beispielsweise Strömungsflügel, Strömungsrillen oder ähnliche aerodynamische Elemente in dem Rahmen 170 aufgenommen sein.

Anschließend an das Aufbringen des Rahmens 170 auf den Vorsprung 166 wird der Sensorchip 148, welcher in Figur 5 lediglich schematisch dargestellt ist, auf der Klebefolie 168 montiert. Diese Montage kann beispielsweise wiederum über ein Pick-and-Place-Verfahren erfolgen. Vorzugsweise ist der Rahmen 170 in seiner Dicke derart dimensioniert, dass die Oberfläche des Sensorchips 148 bündig mit der Oberfläche des Rahmens 170 abschließt, wie dies in Figur 4 dargestellt ist. Auf diese Weise werden Turbulenzen an den Kanten des Sensorchips 148 vermieden, welche bei nicht-bündigem Abschluss (beispielsweise einem Herausragen und/oder einer Vertiefung) entstehen könnten.

Anschließend kann, wie beispielsweise in Figur 3 dargestellt, der Sensorchip 148 durch ein Drahtbond-Verfahren mit der Ansteuer- und Auswerteelektronik 156, insbesondere mit dem Schaltungsträger 160, verbunden und kontaktiert werden. In der in Figur 3 dargestellten perspektivischen Ansicht schräg von oben und in seiner Funktion unterscheidet sich der Chipträger 146 mit dem eingebrachten Sensorchip 148 dann praktisch nicht von der dem Stand der Technik entsprechenden Darstellung in Figur 3. Das Herstellungsverfahren wird jedoch, wie oben beschrieben, durch das vorgeschlagene Verfahren stark vereinfacht, und der Heißfilmluftmassenmesser 112 kann erheblich kostengünstiger hergestellt werden.

## Patentansprüche

1. Vorrichtung (110, 112) zur Bestimmung wenigstens eines Parameters eines fluiden Mediums, insbesondere einer Ansaugluftmasse einer Brennkraftmaschine, wobei die Vorrichtung (110, 112) einen Sensorchip (148) zur Messung des Parameters und eine Ansteuer- und Auswerteelektronik (156) mit einem Schaltungsträger (160) aufweist,
wobei der Sensorchip (148) auf einem in das fluide Medium einbringbaren Chipträger (146) angeordnet ist und der Chipträger (146) einen mit dem Schaltungsträger (160) einstückig ausgebildeten Vorsprung (166) des Schaltungsträgers (160) umfasst,
wobei der Sensorchip (148) an dem Vorsprung (166) fixiert ist, **dadurch gekennzeichnet, dass** die Fixierung des Sensorchips (148) an dem Vorsprung (166) mindestens eine Klebung mit einer Klebefolie (168) umfasst, wobei der Chipträger (146) weiterhin einen Rahmen (170) umfasst, wobei der Rahmen (170) auf den Vorsprung (166) aufgebracht ist und den Sensorchip (148) zumindest teilweise umschließt, wobei der Rahmen (170) durch mindestens eine Klebung mit der Klebefolie (168) mit dem Vorsprung (166) verbunden ist.

2. Vorrichtung (110, 112) nach Anspruch 1, wobei der Rahmen (170) eine Aussparung (172) umfasst, in welche der Sensorchip (148) eingefügt ist.

3. Vorrichtung (110, 112) nach einem der beiden vorhergehenden Ansprüche, wobei der Rahmen (170) zusätzlich ein Strömungsführungselement (178) umfasst, insbesondere eine abgerundete Anströmnase (180), welche ausgestaltet ist, um den Vorsprung (166) auf einer Anströmseite zumindest teilweise zu umschließen.

4. Verfahren zur Herstellung einer Vorrichtung (110, 112) zur Bestimmung wenigstens eines Parameters eines fluiden Mediums, insbesondere zur Bestimmung einer Ansaugluftmasse einer Brennkraftmaschine, wobei das Verfahren folgende Schritte umfasst:
- es wird eine Ansteuer- und Auswerteelektronik (156) verwendet, mit einem Schaltungsträger (160), der einen mit dem Schaltungsträger (160) einstückig ausgebildeten Vorsprung (166) umfasst;
- der Sensorchip (148) wird an dem Vorsprung (166) fixiert, wobei mindestens eines der folgenden Verfahren verwendet wird: ein stoffschlüssiges Verfahren; ein kraftschlüssiges Verfahren; ein formschlüssiges Verfahren, **dadurch gekennzeichnet, dass** die Fixierung des Sensorchips (148) an dem Vorsprung (166) mindestens eine Klebung mit einer Klebefolie (168) umfasst, wobei der Chipträger (146) weiterhin einen Rahmen (170) umfasst, wobei ein Rahmen (170) auf den Vorsprung (166) aufgebracht wird und den Sensorchip (148) zumindest teilweise umschließt, wobei der Rahmen (170) durch mindestens eine Klebung mit der Klebefolie (168) mit dem Vorsprung (166) verbunden wird.

5. Verfahren nach dem vorhergehenden Anspruch, wobei weiterhin ein Rahmen (170) auf den Vorsprung (166) aufgebracht wird, wobei der Rahmen (170) den Sensorchip (148) zumindest teilweise umschließt.

6. Verfahren nach dem vorhergehenden Anspruch, wobei der Rahmen (170) vor Aufbringen der Sensorchips (148) aufgebracht wird.

7. Verfahren nach einem der beiden vorhergehenden Ansprüche, wobei zunächst eine Klebeschicht, insbesondere eine Klebefolie (168), auf den Vorsprung (166) aufgebracht wird und wobei anschließend der Rahmen (170) und der Sensorchip (148) auf die Klebeschicht aufgebracht werden.

8. Verfahren nach dem vorhergehenden Anspruch, wobei für mindestens einen der Aufbringschritte ein Pick-and-Place-Verfahren verwendet wird.

## Claims

1. Device (110, 112) for determining at least one parameter of a fluid medium, in particular an induction air mass of an internal combustion engine, the device (110, 112) having a sensor chip (148) for measuring the parameter and control and evaluation electronics (156) having a circuit carrier (160), the sensor chip .(148) being arranged on a chip carrier (146) that can be introduced into the fluid medium, and the chip carrier (146) comprising a projection (166) of the circuit carrier (160) that is formed in one piece with the circuit carrier (160), the sensor chip (148) being fixed to the projection (166), **characterized in that** the fixing of the sensor chip (148) to the projection (166) comprises at least one adhesive bond using an adhesive film (168), wherein the chip carrier (146) also comprises a frame (170), wherein the frame (170) is applied to the projection (166) and at least partly encloses the sensor chip (148), wherein the frame (170) is connected to the projection (166) by means of at least one adhesive bond using the adhesive film (168).

2. Device (110, 112) according to Claim 1, wherein the frame (170) comprises a recess (172), into which the sensor chip (148) is inserted.

3. Device (110, 112) according to one of the two preceding claims, wherein the frame (170) additionally comprises a flow guiding element (178), in particular a rounded inflow nose (180), which is configured to at least partly enclose the projection (166) on an inflow side.

4. Method for producing a device (110, 112) for determining at least one parameter of a fluid medium, in particular for determining an induction air mass of an internal combustion engine, wherein the method comprises the following steps:
- use is made of control and evaluation electronics (156) having a circuit carrier (160) which comprises a projection (166) formed in one piece with the circuit carrier (160);
- the sensor chip (148) is fixed to the projection (166), wherein at least one of the following methods is used: an integral connection method; a force-fitting connection method; a form-fitting connection method,
**characterized in that** the fixing of the sensor chip (148) to the projection (166) comprises at least one adhesive bond using an adhesive film (168), wherein the chip carrier (146) also comprises a frame (170), wherein a frame (170) is applied to the projection (166) and at least partly encloses the sensor chip (148), wherein the frame (170) is connected to the projection (166) by means of at least one adhesive bond using the adhesive film (168).

5. Method according to the preceding claim, wherein a frame (170) is also applied to the projection (166), wherein the frame (170) at least partly encloses the sensor chip (148).

6. Method according to the preceding claim, wherein the frame (170) is applied before the application of the sensor chip (148).

7. Method according to one of the two preceding claims, wherein at first an adhesive layer, in particular an adhesive film (168), is applied to the projection (166), and wherein the frame (170) and the sensor chip (148) are then applied to the adhesive layer.

8. Method according to the preceding claim, wherein a pick-and-place method is used for at least one of the application steps.

## Revendications

1. Dispositif (110, 112) pour déterminer au moins un paramètre d'un milieu fluide, en particulier d'une masse d'air d'admission d'un moteur à combustion interne, le dispositif (110, 112) présentant une puce de capteur (148) pour mesurer le paramètre et une électronique de commande et d'analyse (156) avec un support de circuit (160), la puce de capteur (148) étant disposée sur un support de puce (146) pouvant être introduit dans le milieu fluide et le support de puce (146) comprenant une partie saillante (166) du support de circuit (160) réalisée d'une seule pièce avec le support de circuit (160), la puce de capteur (148) étant fixée sur la partie saillante (166), **caractérisé en ce que** la fixation de la puce de capteur (148) sur la partie saillante (166) comprend au moins un collage avec un film adhésif (168), le support de puce (146) comprenant en outre un cadre (170), le cadre (170) étant monté sur la partie saillante (166) et entourant au moins en partie la puce de capteur (148), le cadre (170) étant connecté à la partie saillante (166) par au moins un collage avec le film adhésif (168).

2. Dispositif (110, 112) selon la revendication 1, dans lequel le cadre (170) comprend un évidement (172) dans lequel est introduite la puce de capteur (148).

3. Dispositif (110, 112) selon l'une quelconque des deux revendications précédentes, dans lequel le cadre (170) comprend en outre un élément de guidage d'écoulement (178), en particulier un nez d'afflux arrondi (180) qui est configuré pour entourer au moins en partie la partie saillante (166) sur un côté d'afflux.

4. Procédé de fabrication d'un dispositif (110, 112) pour déterminer au moins un paramètre d'un milieu fluide, en particulier pour déterminer une masse d'air d'admission d'un moteur à combustion interne, le procédé comprenant les étapes suivantes :
- on utilise une électronique de commande et d'analyse (156) avec un support de circuit (160) qui comprend une partie saillante (166) réalisée d'une seule pièce avec le support de circuit (160) ;
- la puce de capteur (148) est fixée sur la partie saillante (166), au moins l'un des procédés suivants étant utilisé : un procédé par engagement par liaison de matière ; un procédé par engagement par force ; un procédé par engagement par correspondance de formes,
**caractérisé en ce que** la fixation de la puce de capteur (148) à la partie saillante (166) comprend au moins un collage avec un film adhésif (168), le support de puce (146) comprenant en outre un cadre (170), un cadre (170) étant appliqué sur la partie saillante (166) et entourant au moins en partie la puce de capteur (148), le cadre (170) étant connecté à la partie saillante (166) par au moins un collage avec le film adhésif (168).

5. Procédé selon la revendication précédente, dans lequel un cadre (170) est en outre appliqué sur la partie saillante (166), le cadre (170) entourant au moins en partie la puce de capteur (148).

6. Procédé selon la revendication précédente, dans lequel le cadre (170) est appliqué avant d'appliquer la puce de capteur (148).

7. Procédé selon l'une des deux revendications précédentes, dans lequel une couche adhésive, en particulier un film adhésif (168), est d'abord appliqué(e) sur la partie saillante (166) et ensuite le cadre (170) et la puce de capteur (148) sont appliqués sur la couche adhésive.

8. Procédé selon la revendication précédente, dans lequel pour au moins l'une des étapes d'application, on utilise un procédé pick-and-place.
